# EUROPEAN PATENT APPLICATION

(11) **EP 4 114 022 A1**
(43) Date of publication of application: **04.01.2023**
(21) Application number: 20929087.3
(22) Date of filing: 02.11.2020
(51) Int. Cl.: H04N 21/436

(54) **REVERSE SCREEN-PROJECTION METHOD, SYSTEM AND APPARATUS FOR SMART SCREEN, AND SMART SCREEN AND READABLE STORAGE MEDIUM**

(30) Priority: 02.04.2020 CN 202010256067
(71) Applicant: Shenzhen Skyworth-Rgb Electronic Co., Ltd, Nanshan District Shenzhen, Guangdong 518000 (CN); Shenzhen Coocaa Network Technology Co., Ltd, Shenzhen, Guangdong 518000 (CN)
(72) Inventor: LI, Qiwen, Shenzhen, Guangdong 518000 (CN)
(74) Representative: Osterhoff, Utz
(86) International application number: PCT/CN2020/125807
(87) International publication number: WO 2021/196600

(57) **Abstract**

Disclosed are a smart screen reverse projection method, system, device, smart screen and readable storage medium. The smart screen reverse projection method includes: connecting to a television (TV) device through a wireless network after the TV device is started; sending a reverse projection instruction to the TV device, and establishing a reverse projection transmission link with the TV device; and receiving a real-time video stream sent by the TV device according to the transmission link, decoding and playing the real-time video stream. The video picture played on the display screen can be reversely projected to the smart screen in real time, such that the user can continue to watch the video played on the display screen after leaving the TV device by using the smart screen, to improve the user's experience.

## Description

This application claims priority to Chinese Patent Application No. 2020102560677, filed on April 2, 2020, and entitled "SMART SCREEN REVERSE PROJECTION METHOD, SYSTEM, DEVICE, SMART SCREEN AND READABLE STORAGE MEDIUM", the entire contents of which are incorporated herein by reference.

The present disclosure relates to the technical field of smart screens, and in particular, to a smart screen reverse projection method, system, device, smart screen and readable storage medium.

### BACKGROUND

When the existing TV equipment, such as TV, receives the signal source through the high-definition interface and plays the corresponding video, the signal source is live in real time and cannot be paused. After the user leaves the TV, the currently playing content may be missed, thereby affecting the user's viewing experience.

### SUMMARY

In view of one of the above problems, the present disclosure provides a smart screen reverse projection method, system, device, smart screen and readable storage medium, so that the user can continue to watch the video played on the display screen after leaving the TV device by using the smart screen, so as to meet the user's viewing needs and improve the user's experience.

In order to at least partially achieve one of the above purposes, the present disclosure adopts the following technical solutions.

The present disclosure provides a smart screen reverse projection method, including following operations:
connecting to a television (TV) device through a wireless network after the TV device is started;
sending a reverse projection instruction to the TV device, and establishing a reverse projection transmission link with the TV device; and
receiving a real-time video stream sent by the TV device according to the transmission link, decoding and playing the real-time video stream.

In an embodiment, the TV device and the smart screen are connected to a network cloud server, a communication message between the TV device and the smart screen is managed through the network cloud server, and the operation of sending the reverse projection instruction to the TV device includes:
sending the reverse projection instruction to the network cloud server, to make the network cloud server forward the reverse projection instruction to the TV device.

In an embodiment, the method further includes:
receiving the real-time video stream through the network cloud server in response to detecting that a distance from the TV device exceeds a first preset distance, and/or the transmission link with the TV device is interrupted.

In an embodiment, the method further includes:
switching from connecting to the network cloud server to receiving the real-time video stream over the transmission link in response to detecting that the distance from the TV device is less than or equal to the first preset distance, and the transmission link is reconnected.

In an embodiment, the operation of sending the reverse projection instruction to the TV device includes:
in response to detecting that the distance from the TV device exceeds a second preset distance, and/or in response to detecting that leaving a preset area, generating the reverse projection instruction and sending the reverse projection instruction to the TV device; or
in response to a user triggering a reverse projection switch, generating the reverse projection instruction and sending the reverse projection instruction to the TV device.

The present disclosure further provides a smart screen reverse projection device, applied to a smart screen, including:
a network connection module, configured to connect to a television (TV) device through a wireless network after the TV device is started;
a transmission module, configured to send a reverse projection instruction to the TV device, and establish a reverse projection transmission link with the TV device; and receive a real-time video stream sent by the TV device according to the transmission link, decode and play the real-time video stream.

In an embodiment, the TV device and the smart screen are connected to a network cloud server, a communication message between the TV device and the smart screen is managed through the network cloud server, and the transmission module is configured to send the reverse projection instruction to the TV device through the following operation: sending the reverse projection instruction to the network cloud server, to make the network cloud server forward the reverse projection instruction to the TV device.

In an embodiment, the transmission module is further configured to: receive the real-time video stream through the network cloud server in response to detecting that a distance from the TV device exceeds a first preset distance, and/or the transmission link with the TV device is interrupted.

In an embodiment, the transmission module is further configured to: switch from connecting to the network cloud server to receiving the real-time video stream over the transmission link in response to detecting that the distance from the TV device is less than or equal to the first preset distance, and the transmission link is reconnected.

In an embodiment, the transmission module is configured to send the reverse projection instruction to the TV device through the following operations:
in response to detecting that the distance from the TV device exceeds a second preset distance, and/or in response to detecting that leaving a preset area, generating the reverse projection instruction and sending the reverse projection instruction to the TV device; or
in response to a user triggering a reverse projection switch, generating the reverse projection instruction and sending the reverse projection instruction to the TV device.

The present disclosure further provides a smart screen reverse projection method, applied to a television (TV) device, including following operations:
connecting to a smart screen through a wireless network;
after receiving a reverse projection instruction sent by the smart screen, collecting a video stream played on the screen in real time to obtain a real-time video stream; and
sending the real-time video stream to the smart screen for decoding and playing.

In an embodiment, the TV device and the smart screen are connected to a network cloud server, a communication message between the TV device and the smart screen is managed through the network cloud server, and the TV device is configured to receive the reverse projection instruction sent by the smart screen through the network cloud server.

In an embodiment, the TV device and the smart screen transmit the reverse projection instruction through a transmission link, and the method further includes:
sending the real-time video stream through the network cloud server in response to detecting that a distance from the smart screen exceeds a first preset distance, and/or the transmission link with the smart screen is interrupted.

In an embodiment, the method further includes:
switching from connecting to the network cloud server to sending the real-time video stream over the transmission link in response to detecting that the distance from the smart screen is less than or equal to the first preset distance, and the transmission link is reconnected.

The present disclosure further provides a smart screen reverse projection device, applied to a television (TV) device, including:
an information transmission module, configured to connect to a smart screen through a wireless network; and
an information processing module, configured to collect a video stream played on the screen in real time to obtain a real-time video stream after receiving a reverse projection instruction sent by the smart screen; and send the real-time video stream to the smart screen for decoding and playing.

The present disclosure further provides a smart screen reverse projection system, including:
a smart screen; and
a television (TV) device,
the TV device and the smart screen are connected through a wireless network after startup;
the smart screen is configured to send a reverse projection instruction to the TV device through the wireless network, and establish a reverse projection transmission link with the TV device;
after receiving the reverse projection instruction, the TV device is configured to collect a real-time video stream, encode the real-time video stream and send the real-time video stream to the smart screen through the transmission link; and
the smart screen is configured to receive the real-time video stream through the transmission link for decoding and playing.

In an embodiment, the smart screen reverse projection system further includes:
a network cloud server,
the network cloud server is configured to manage a communication message between the TV device and the smart screen, receive the reverse projection instruction of the smart screen and forward the reverse projection instruction to the TV device;
the TV device is configured to send the real-time video stream to the network cloud server when detecting that a distance from the smart screen exceeds a first preset distance, and/or the transmission link with the smart screen is interrupted; and
the smart screen is configured to receive the real-time video stream through the network cloud server when detecting that a distance from the TV device exceeds the first preset distance, and/or the transmission link with the TV device is interrupted.

In an embodiment, the smart screen is further configured to generate the reverse projection instruction and send the reverse projection instruction to the TV device in response to detecting that the distance from the TV device exceeds a second preset distance, and/or in response to detecting that leaving a preset area; or generate the reverse projection instruction and send the reverse projection instruction to the TV device in response to a user triggering a reverse projection switch.

The present disclosure further provides a smart screen, including a memory and a processor, wherein a computer program is stored in the memory, and the processor runs the computer program to make the smart screen execute the smart screen reverse projection method.

The present disclosure further provides a readable storage medium, a computer program is stored in the readable storage medium, and when the computer program runs on a processor, the smart screen reverse projection method is executed.

The present disclosure provides a smart screen reverse projection method, system, device, smart screen and readable storage medium. The smart screen reverse projection method includes: connecting to a TV device through a wireless network after the TV device is started; sending a reverse projection instruction to the TV device, and establishing a reverse projection transmission link with the TV device; and receiving a real-time video stream sent by the TV device according to the transmission link, decoding and playing the real-time video stream. The video picture played on the display screen can be reversely projected to the smart screen in real time, such that the user can continue to watch the video played on the display screen after leaving the TV device by using the smart screen, so as to meet the user's viewing needs and improve the user's experience.

In order to make the above-mentioned objects, features and advantages of the present disclosure more obvious and easy to be understood, the preferred embodiments are exemplified below, and are described in detail as follows in conjunction with the accompanying drawings.

### BRIEF DESCRIPTION OF THE DRAWINGS

In order to illustrate the technical solutions of the present disclosure more clearly, the following briefly introduces the accompanying drawings that need to be used in the embodiments. It should be understood that the following drawings only illustrate certain embodiments of the present disclosure, and therefore should not be construed as limiting the protection scope of the present disclosure. In the various figures, similar components are numbered similarly.
FIG. 1 is an exemplary flowchart of a smart screen reverse projection method according to an embodiment of the present disclosure;
FIG. 2 is another exemplary flowchart of a smart screen reverse projection method according to an embodiment of the present disclosure;
FIG. 3 is another exemplary flowchart of a smart screen reverse projection method according to an embodiment of the present disclosure;
FIG. 4 is another exemplary flowchart of a smart screen reverse projection method according to an embodiment of the present disclosure;
FIG. 5 is a schematic structural diagram of a smart screen reverse projection system according to an embodiment of the present disclosure; and
FIG. 6 is another schematic structural diagram of a smart screen reverse projection system according to an embodiment of the present disclosure.

### DETAILED DESCRIPTION OF THE EMBODIMENTS

The technical solutions in the embodiments of the present disclosure will be clearly and completely described below with reference to the accompanying drawings of the present disclosure. Obviously, the described embodiments are only a part of the embodiments of the present disclosure, but not all of the embodiments.

The components in the embodiments of the present disclosure generally described and illustrated in the drawings herein may be arranged and designed in a variety of different configurations. Thus, the following detailed description of the embodiments of the present disclosure provided in the accompanying drawings is not intended to limit the scope of the present disclosure, but is merely representative of selected embodiments of the present disclosure. Based on the embodiments of the present disclosure, all other embodiments obtained by those skilled in the art without creative work fall within the protection scope of the present disclosure.

Hereinafter, the terms "including", "having" and their cognates, which may be used in various embodiments of the present disclosure, are only intended to denote particular features, numbers, steps, operations, elements, components, or combinations of the foregoing, should not be interpreted as excluding the presence of one or more other features, numbers, steps, operations, elements, components or combinations of the foregoing or adding the possibility of one or more features, numbers, steps, operations, elements, components or combinations of the foregoing.

Furthermore, the terms "first", "second", "third", etc. are only used to differentiate the description and should not be construed as indicating or implying relative importance.

Unless otherwise defined, all terms (including technical and scientific terms) used herein have the same meaning as commonly understood by one of ordinary skill in the art to which the various embodiments of the present disclosure belong. The terms (such as those defined in commonly used dictionaries) will be construed to have the same meaning as the contextual meaning in the relevant technical field, and will not be construed as having an idealized or overly formal meaning unless clearly defined in the various embodiments of the present disclosure.

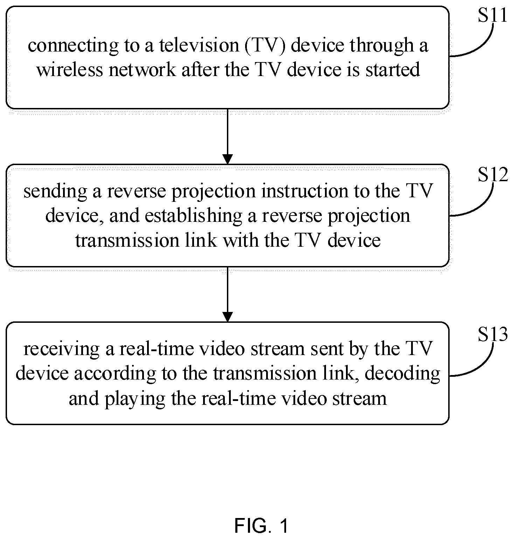

FIG. 1 is an exemplary flowchart of a smart screen reverse projection method according to an embodiment of the present disclosure. The method can be applied to a smart screen wirelessly connected to a TV device, and the method includes the following operations.

Operation S11, connecting to a TV device through a wireless network after the TV device is started.

In some embodiments of the present disclosure, TV device includes TV sets and various monitors, which can be connected to digital set-top boxes or other signal sources for video playback. The signal source is generally transmitted to the TV device through the high-definition transmission interface of the digital set-top box or other signal transmitter, and is decoded by the TV device and then played. The TV device is also wirelessly connected to the smart screen. The smart screen can be a portable display screen to connect to various home appliances through the wireless network, to control the home appliances through commands or receive state information of the home appliances, and to link with the home appliances through applications.

In some embodiment of the present disclosure, after the TV device is started, the TV device can be connected to the smart screen through the wireless network. Exemplarily, after the TV device is started, a connection request information can be sent to the smart screen. After receiving the connection request information, the smart screen can wirelessly communicate with the TV device through the wireless network. The connection request information may be forwarded through the route connected by the TV device, or forwarded by the network cloud server that manages the communication message, which is not limited herein.

Operation S12, sending a reverse projection instruction to the TV device, and establishing a reverse projection transmission link with the TV device.

In some embodiments of the present disclosure, the user may operate the smart screen, a reverse projection instruction can be generated on the smart screen to the TV device, so that the TV device can use the image acquisition module to capture the video stream in real time after receiving the reverse projection instruction. Especially for some non-network video, such as the signal source of digital TV set-top box, this kind of signal source cannot be transmitted through the Internet. When users need to watch on a portable smart screen, a reverse projection instruction can be sent to the TV device that is playing, such as a TV. The TV device can capture the video stream played on the screen in real time, to transmit the video stream to the smart screen for playback.

In some embodiments of the present disclosure, after receiving the reverse projection instruction, the TV device can establish a reverse projection transmission link with the smart screen. The transmission link is only used to transmit the real-time video stream to ensure that the real-time video stream is not interrupted and that the delay is relatively small. The above process of establishing a reverse projection transmission link can be implemented by using an application program. For example, both the smart screen and the TV device are provided with applications for establishing transmission link, and a transmission link dedicated to transmitting real-time video streams is established through the applications of the smart screen and the TV device.

Operation S13, receiving a real-time video stream sent by the TV device according to the transmission link, decoding and playing the real-time video stream.

In some embodiments of the present disclosure, after receiving the real-time video stream sent by the TV device using the transmission link, the smart screen will decode and play the real-time video stream, so as to reversely project the picture played on the TV device to the smart screen in real time. The picture on the smart screen is synchronized with the picture on the display screen. If there is a video playback progress in the TV device, the smart screen will also play the corresponding video at the current playback progress. Through the above operations of the present disclosure, the picture played on the TV device can be reversely projected to the smart screen in real time, so that the user can continue to watch the video played on the display screen after leaving the TV device by using the smart screen, thereby improving the user experience.

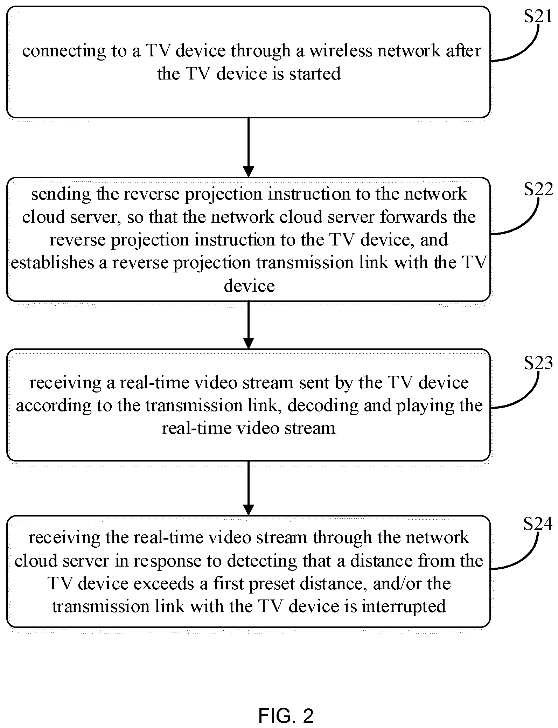

FIG. 2 is another flowchart of a smart screen reverse projection method according to an embodiment of the present disclosure. The method includes the following operations.

Operation S21, connecting to a TV device through a wireless network after the TV device is started.

The operation S21 is the same as the above-mentioned operation S11, and is not repeated herein.

Operation S22, sending the reverse projection instruction to the network cloud server, so that the network cloud server forwards the reverse projection instruction to the TV device, and establishes a reverse projection transmission link with the TV device.

In some embodiments of the present disclosure, the TV device and the smart screen can be connected to the network cloud server, and the communication message between the TV device and the smart screen can be managed through the network cloud server. That is, the mutual transmission of various messages between the smart screen and the TV device can be managed in a unified manner through the network cloud server, so that when the smart screen is far away from the TV device, direct communication cannot be achieved. Or, when the smart screen and the TV device are in different routing connections, messages can still be exchanged through the network cloud server. The reverse projection instruction can also be sent by the smart screen to the network cloud server, and then the network cloud server forwards the reverse projection instruction to the TV device. Utilizing the network cloud server helps the provider of the smart screen to monitor the service quality, so as to improve the communication between the smart screen and the TV device, thereby improving the user experience.

Operation S23, receiving a real-time video stream sent by the TV device according to the transmission link, decoding and playing the real-time video stream.

The operation S23 is the same as the above-mentioned operation S13, and is not repeated herein.

Operation S24, receiving the real-time video stream through the network cloud server in response to detecting that a distance from the TV device exceeds a first preset distance, and/or the transmission link with the TV device is interrupted.

In some embodiments of the present disclosure, a sensor for detecting the distance between the TV device and the smart screen can also be set in the TV device and the smart screen. When the smart screen detects that the distance from the TV device exceeds the first preset distance, or the transmission link is interrupted, or both occur, a network cloud server can be chosen to establish a video stream connection with the TV device, so that the TV device can transmit the real-time video stream to the network cloud server through the wireless network, and then the network cloud server forwards the real-time video stream to the smart screen. The above situation can be applied, for example, in the following scenarios. For example, when a user is watching a TV program through a TV device, the user suddenly has other things to leave, but the TV program is a real-time program played by a set-top box and cannot be replayed later, at this time, the user can take the smart screen for reverse projection. When the smart screen is far away from the TV device, in order to avoid communication interruption, the video stream is forwarded through the dedicated network cloud server. The TV device is also provided with a distance sensor. When it is detected that the distance between the TV device and the smart screen exceeds the first preset distance, or the transmission link is interrupted, or both occur, the video stream is selected to be transmitted to the network cloud server.

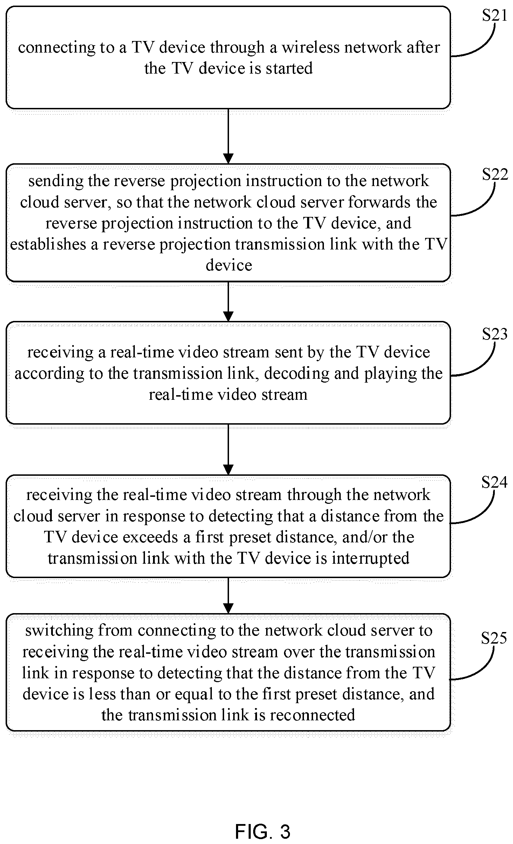

FIG. 3 is another flowchart of a smart screen reverse projection method according to an embodiment of the present disclosure. The method further includes the following operations.

Operation S25, switching from connecting to the network cloud server to receiving the real-time video stream over the transmission link in response to detecting that the distance from the TV device is less than or equal to the first preset distance, and the transmission link is reconnected.

In some embodiments of the present disclosure, when the smart screen is far away from the TV device, the forwarding process of the video stream through the network cloud server will cause a time delay in the playback of the video. Therefore, when the user returns to the vicinity of the TV device and the transmission link is reconnected, it is possible to switch from the mode forwarded by the network cloud server back to the mode of using the transmission link, and reuse the transmission link to perform reverse projection of the real-time video stream to reduce the delay of playback.

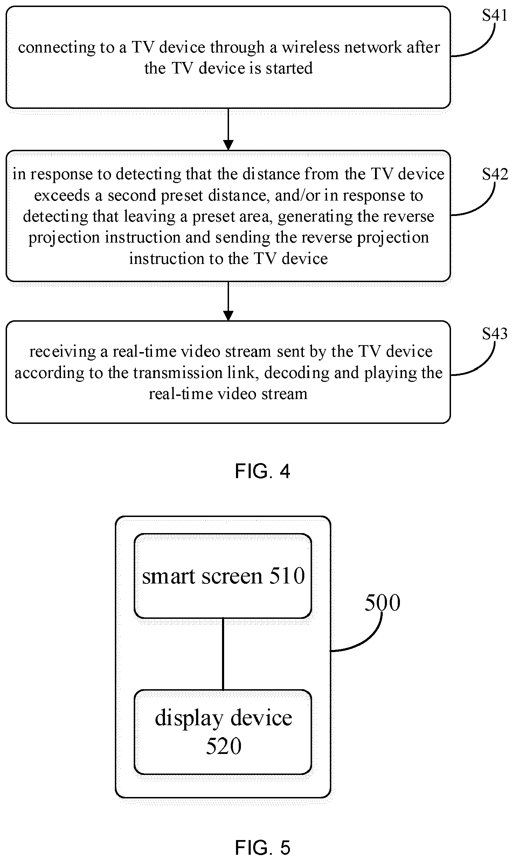

FIG. 4 is another flowchart of a smart screen reverse projection method according to an embodiment of the present disclosure. The method includes the following operations.

Operation S41, connecting to a TV device through a wireless network after the TV device is started.

The operation S41 is the same as the above-mentioned operation S11, and is not repeated herein.

Operation S42, in response to detecting that the distance from the TV device exceeds a second preset distance, and/or in response to detecting that leaving a preset area, generating the reverse projection instruction and sending the reverse projection instruction to the TV device.

In some embodiments of the present disclosure, a distance detection sensor and an ultra-wide screen chip can be provided in the smart screen. The distance between the smart screen and the TV device is detected by the distance detection sensor, and the indoor position of the smart screen is located and the indoor position of the TV device is identified through the ultra-wide screen chip. Similarly, the TV device may also be provided with a distance detection sensor and an ultra-wide screen chip for detecting the distance between the TV device and the smart screen and identifying the position of the smart screen. When the smart screen detects that the distance between the smart screen and the TV device exceeds the second preset distance, or detects that the smart screen leaves the preset area, or both are satisfied at the same time, the reverse projection instruction may be generated and sent to the television device so as to perform a reverse projection operation. The above operations can be applied to the scenario when the user needs to go to other rooms from the current location of the TV device, but does not want to miss the real-time program played by the TV device. The smart screen can be placed in a preset area near the TV device. When the user leaves the area with the smart screen, or is far away from the TV device, the reverse projection can be automatically triggered.

In some embodiments of the present disclosure, the reverse projection instruction may also be generated and sent to the TV device in response to a user triggering a reverse projection switch. The reverse projection switch may be a virtual switch set on the smart screen, and after the user triggers the reverse projection switch, the reverse projection instruction is generated and sent to the TV device.

Operation S43, receiving a real-time video stream sent by the TV device according to the transmission link, decoding and playing the real-time video stream.

The operation S43 is the same as the above-mentioned operation S13, and is not repeated herein.

Based on the above, the present disclosure further provides a smart screen reverse projection device, which is applied to a smart screen. The smart screen reverse projection device includes: a network connection module and a transmission module.

The network connection module is configured to connect to a TV device through a wireless network after the TV device is started. The transmission module is configured to send a reverse projection instruction to the TV device, and establish a reverse projection transmission link with the TV device; and receive a real-time video stream sent by the TV device according to the transmission link, decode and play the real-time video stream.

In an embodiment, the TV device and the smart screen are connected to a network cloud server, a communication message between the TV device and the smart screen is managed through the network cloud server, and the transmission module is configured to send the reverse projection instruction to the TV device through the following operation: sending the reverse projection instruction to the network cloud server, to make the network cloud server forward the reverse projection instruction to the TV device.

In an embodiment, the transmission module is further configured to: receive the real-time video stream through the network cloud server in response to detecting that a distance from the TV device exceeds a first preset distance, and/or the transmission link with the TV device is interrupted.

In an embodiment, the transmission module is further configured to: switch from connecting to the network cloud server to receiving the real-time video stream over the transmission link in response to detecting that the distance from the TV device is less than or equal to the first preset distance, and the transmission link is reconnected.

In an embodiment, the transmission module is configured to send the reverse projection instruction to the TV device through the following operations: in response to detecting that the distance from the TV device exceeds a second preset distance, and/or in response to detecting that leaving a preset area, generating the reverse projection instruction and sending the reverse projection instruction to the TV device; or in response to a user triggering a reverse projection switch, generating the reverse projection instruction and sending the reverse projection instruction to the TV device.

The present disclosure further provides a smart screen reverse projection method, applied to a TV device, including following operations: connecting to a smart screen through a wireless network; after receiving a reverse projection instruction sent by the smart screen, collecting a video stream played on the screen in real time to obtain a real-time video stream; and sending the real-time video stream to the smart screen for decoding and playing.

In an embodiment, the TV device and the smart screen are connected to a network cloud server, a communication message between the TV device and the smart screen is managed through the network cloud server, and the TV device is configured to receive the reverse projection instruction sent by the smart screen through the network cloud server.

In an embodiment, the TV device and the smart screen transmit the reverse projection instruction through a transmission link, and the method further includes: sending the real-time video stream through the network cloud server in response to detecting that a distance from the smart screen exceeds a first preset distance, and/or the transmission link with the smart screen is interrupted.

In an embodiment, the method further includes: switching from connecting to the network cloud server to sending the real-time video stream over the transmission link in response to detecting that the distance from the smart screen is less than or equal to the first preset distance, and the transmission link is reconnected.

The present disclosure further provides a smart screen reverse projection device, applied to a TV device, including: an information transmission module, configured to connect to a smart screen through a wireless network; and an information processing module, configured to collect a video stream played on the screen in real time to obtain a real-time video stream after receiving a reverse projection instruction sent by the smart screen; and send the real-time video stream to the smart screen for decoding and playing.

FIG. 5 is a schematic structural diagram of a smart screen reverse projection system according to embodiment 1 of the present disclosure.

The smart screen reverse projection system 500 includes a smart screen 510 and a TV device 520

The TV device 520 and the smart screen 510 are connected through a wireless network after startup.

The smart screen 510 is configured to send a reverse projection instruction to the TV device 520 through the wireless network, and establish a reverse projection transmission link with the TV device 520.

After receiving the reverse projection instruction, the TV device 520 is configured to collect a real-time video stream, encode the real-time video stream and send the real-time video stream to the smart screen 510 through the transmission link.

The smart screen 510 is configured to receive the real-time video stream through the transmission link for decoding and playing.

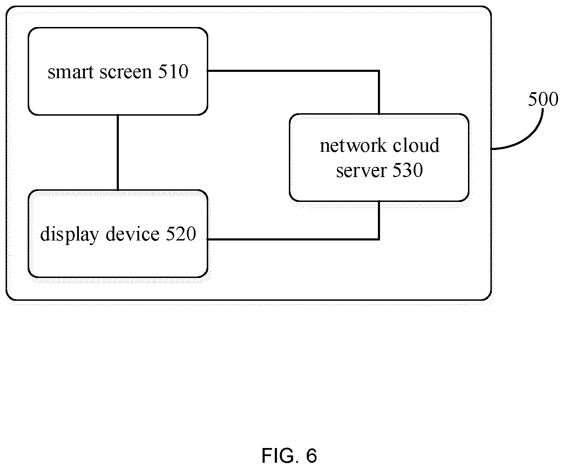

As shown in FIG. 6, the smart screen reverse projection system 500 further includes a network cloud server 530.

The network cloud server 530 is configured to manage a communication message between the TV device 520 and the smart screen 510, receive the reverse projection instruction of the smart screen 510 and forward the reverse projection instruction to the TV device 520.

The TV device 520 is configured to send the real-time video stream to the network cloud server 530 when detecting that a distance from the smart screen 510 exceeds a first preset distance, and/or the transmission link with the smart screen 510 is interrupted.

The smart screen 510 is configured to receive the real-time video stream through the network cloud server 530 when detecting that a distance from the TV device 520 exceeds the first preset distance, and/or the transmission link with the TV device 520 is interrupted.

The smart screen 510 is further configured to generate the reverse projection instruction and send the reverse projection instruction to the TV device 520 in response to detecting that the distance from the TV device 520 exceeds a second preset distance, and/or in response to detecting that leaving a preset area.

In some embodiments of the present disclosure, for more detailed functional descriptions among the above-mentioned various devices, reference may be made to the contents of the corresponding parts in the foregoing embodiments, and details are not repeated herein.

Besides, the present disclosure further provides a smart screen, including a memory and a processor. A computer program is stored in the memory, and the processor runs the computer program, so that the smart screen executes the above method executed by the smart screen or the functions of each module included in the smart screen in the above system.

The memory may include program storage area and data storage area. The program storage area can store an operating system, an application program required for at least one function (such as a sound playback function, an image playback function, etc.), or the like. The data storage area can store data (such as audio data, phone book, etc.) created according to the use of the smart screen, etc. Additionally, the memory may include high-speed random access memory, and may also include non-volatile memory, such as at least one magnetic disk storage device, flash memory device, or other volatile solid state storage device.

The present disclosure further provides a readable storage medium for storing the computer program used in the above-mentioned smart screen.

In the several embodiments provided in the present disclosure, it should be understood that the disclosed apparatus and method may also be implemented in other manners. The device embodiments described above are only illustrative. For example, the flowchart and block diagrams in the drawings illustrate the architecture, functionality, and operation of possible implementations of apparatus, methods and computer program products according to various embodiments of the present disclosure. In this regard, each block in the flowchart or block diagram may represent a module, segment, or portion of code, and the modules, segments, or portions of code include one or more executable instructions for implementing specified logical functions. It should also be noted that, in alternative implementations, the functions noted in the block may occur out of the order noted in the figures. For example, two blocks in succession may, in fact, be executed substantially concurrently, or the blocks may sometimes be executed in the reverse order, depending upon the functionality involved. It should also be note that each block in the block diagrams and/or flow diagrams, and combinations of blocks in the block diagrams and/or flow diagrams can be implemented in special purpose hardware-based systems that perform the specified functions or actions, or can be implemented in a combination of special purpose hardware and computer instructions.

In addition, each functional module or unit in each embodiment of the present disclosure may be integrated together to form an independent part, or each module may exist independently, or two or more modules may be integrated to form an independent part.

If the functions are implemented in the form of software function modules and sold or used as independent products, they can be stored in a computer-readable storage medium. Based on this understanding, the technical solutions of the present disclosure can be embodied in the form of software products in essence, or the parts that make contributions to the prior art or the parts of the technical solutions, the computer software product is stored in a storage medium and includes a number of instructions, to cause a computer device (which may be a smart phone, a personal computer, a server, or a network device, etc.) to execute all or part of the operations of the methods described in the various embodiments of the present disclosure. The aforementioned storage medium includes: U disk, removable hard disk, read-only memory (ROM), random access memory (RAM), magnetic disk or optical disk and other media that can store program codes.

The above are only specific implementations of the present disclosure, but the protection scope of the present disclosure is not limited thereto. Any person skilled in the art can easily think of changes or substitutions within the technical scope disclosed in the present disclosure, which should be covered by the protection scope of the present disclosure. Therefore, the protection scope of the present disclosure should be based on the protection scope of the claims.

### Industrial Applicability

The embodiments of the present disclosure provide a smart screen reverse projection method, system, device, smart screen and readable storage medium, such that the user can continue to watch the video played on the display screen after leaving the TV device by using the smart screen, so as to meet the user's viewing needs and improve the user's experience.

## Claims

1. A smart screen reverse projection method, **characterized by** comprising following operations:
connecting to a television (TV) device through a wireless network after the TV device is started;
sending a reverse projection instruction to the TV device, and establishing a reverse projection transmission link with the TV device; and
receiving a real-time video stream sent by the TV device according to the transmission link, decoding and playing the real-time video stream.

2. The smart screen reverse projection method of claim 1, wherein the TV device and the smart screen are connected to a network cloud server, a communication message between the TV device and the smart screen is managed through the network cloud server, and the operation of sending the reverse projection instruction to the TV device comprises:
sending the reverse projection instruction to the network cloud server, to make the network cloud server forward the reverse projection instruction to the TV device.

3. The smart screen reverse projection method of claim 2, further comprising: receiving the real-time video stream through the network cloud server in response to detecting that a distance from the TV device exceeds a first preset distance, and/or the transmission link with the TV device is interrupted.

4. The smart screen reverse projection method of claim 3, further comprising:
switching from connecting to the network cloud server to receiving the real-time video stream over the transmission link in response to detecting that the distance from the TV device is less than or equal to the first preset distance, and the transmission link is reconnected.

5. The smart screen reverse projection method of any one of claims 1 to 4, wherein the operation of sending the reverse projection instruction to the TV device comprises:
in response to detecting that the distance from the TV device exceeds a second preset distance, and/or in response to detecting that leaving a preset area, generating the reverse projection instruction and sending the reverse projection instruction to the TV device; or
in response to a user triggering a reverse projection switch, generating the reverse projection instruction and sending the reverse projection instruction to the TV device.

6. A smart screen reverse projection device, applied to a smart screen, **characterized by** comprising:
a network connection module, configured to connect to a television (TV) device through a wireless network after the TV device is started;
a transmission module, configured to send a reverse projection instruction to the TV device, and establish a reverse projection transmission link with the TV device; and receive a real-time video stream sent by the TV device according to the transmission link, decode and play the real-time video stream.

7. The smart screen reverse projection device of claim 6, wherein the TV device and the smart screen are connected to a network cloud server, a communication message between the TV device and the smart screen is managed through the network cloud server, and the transmission module is configured to send the reverse projection instruction to the TV device through the following operation: sending the reverse projection instruction to the network cloud server, to make the network cloud server forward the reverse projection instruction to the TV device.

8. The smart screen reverse projection device of claim 7, wherein the transmission module is further configured to: receive the real-time video stream through the network cloud server in response to detecting that a distance from the TV device exceeds a first preset distance, and/or the transmission link with the TV device is interrupted.

9. The smart screen reverse projection device of claim 8, wherein the transmission module is further configured to: switch from connecting to the network cloud server to receiving the real-time video stream over the transmission link in response to detecting that the distance from the TV device is less than or equal to the first preset distance, and the transmission link is reconnected.

10. The smart screen reverse projection device of any one of claims 6 to 9, wherein the transmission module is configured to send the reverse projection instruction to the TV device through the following operations:
in response to detecting that the distance from the TV device exceeds a second preset distance, and/or in response to detecting that leaving a preset area, generating the reverse projection instruction and sending the reverse projection instruction to the TV device; or
in response to a user triggering a reverse projection switch, generating the reverse projection instruction and sending the reverse projection instruction to the TV device.

11. A smart screen reverse projection method, applied to a television (TV) device, **characterized by** comprising following operations:
connecting to a smart screen through a wireless network;
after receiving a reverse projection instruction sent by the smart screen, collecting a video stream played on the screen in real time to obtain a real-time video stream; and sending the real-time video stream to the smart screen for decoding and playing.

12. The smart screen reverse projection method of claim 11, wherein the TV device and the smart screen are connected to a network cloud server, a communication message between the TV device and the smart screen is managed through the network cloud server, and the TV device is configured to receive the reverse projection instruction sent by the smart screen through the network cloud server.

13. The smart screen reverse projection method of claim 12, wherein the TV device and the smart screen transmit the reverse projection instruction through a transmission link, and the method further comprises:
sending the real-time video stream through the network cloud server in response to detecting that a distance from the smart screen exceeds a first preset distance, and/or the transmission link with the smart screen is interrupted.

14. The smart screen reverse projection method of claim 13, wherein the method further comprises:
switching from connecting to the network cloud server to sending the real-time video stream over the transmission link in response to detecting that the distance from the smart screen is less than or equal to the first preset distance, and the transmission link is reconnected.

15. A smart screen reverse projection device, applied to a television (TV) device, **characterized by** comprising:
an information transmission module, configured to connect to a smart screen through a wireless network; and
an information processing module, configured to collect a video stream played on the screen in real time to obtain a real-time video stream after receiving a reverse projection instruction sent by the smart screen; and send the real-time video stream to the smart screen for decoding and playing.

16. A smart screen reverse projection system, **characterized by** comprising:
a smart screen; and
a television (TV) device,
wherein the TV device and the smart screen are connected through a wireless network after startup;
the smart screen is configured to send a reverse projection instruction to the TV device through the wireless network, and establish a reverse projection transmission link with the TV device;
after receiving the reverse projection instruction, the TV device is configured to collect a real-time video stream, encode the real-time video stream and
send the real-time video stream to the smart screen through the transmission link; and
the smart screen is configured to receive the real-time video stream through the transmission link for decoding and playing.

17. The smart screen reverse projection system of claim 16, further comprising:
a network cloud server,
wherein the network cloud server is configured to manage a communication message between the TV device and the smart screen, receive the reverse projection instruction of the smart screen and forward the reverse projection instruction to the TV device;
the TV device is configured to send the real-time video stream to the network cloud server when detecting that a distance from the smart screen exceeds a first preset distance, and/or the transmission link with the smart screen is interrupted; and
the smart screen is configured to receive the real-time video stream through the network cloud server when detecting that a distance from the TV device exceeds the first preset distance, and/or the transmission link with the TV device is interrupted.

18. The smart screen reverse projection system of claim 16 or claim 17, wherein the smart screen is further configured to generate the reverse projection instruction and send the reverse projection instruction to the TV device in response to detecting that the distance from the TV device exceeds a second preset distance, and/or in response to detecting that leaving a preset area; or generate the reverse projection instruction and send the reverse projection instruction to the TV device in response to a user triggering a reverse projection switch.

19. A smart screen, **characterized by** comprising a memory and a processor, wherein a computer program is stored in the memory, and the processor runs the computer program to make the smart screen execute the smart screen reverse projection method according to any one of claims 1 to 5.

20. A readable storage medium, **characterized in that**, a computer program is stored in the readable storage medium, and when the computer program runs on a processor, the smart screen reverse projection method according to any one of claims 1 to 5 is executed.
